(19) Europäisches Patentamt

European Patent Office

Office européen des brevets

(11) **EP 1 074 829 A1**

(12) **EUROPEAN PATENT APPLICATION**
published in accordance with Art. 158(3) EPC

(43) Date of publication:
**07.02.2001 Bulletin 2001/06**

(51) Int. Cl.⁷: **G01M 3/32**

(21) Application number: **00900512.5**

(22) Date of filing: **17.01.2000**

(86) International application number:
**PCT/ES00/00012**

(87) International publication number:
**WO 00/42408 (20.07.2000 Gazette 2000/29)**

(84) Designated Contracting States:
**AT BE CH CY DE DK ES FI FR GB GR IE IT LI LU MC NL PT SE**

(30) Priority: **18.01.1999 ES 9900091**

(71) Applicant: **Net, S.A.**
**46100 Burjasot (Valencia) (ES)**

(72) Inventors:
 • **VELA GASULLA, Antonio**
 **E-46100 Burjasot (Valencia) (ES)**
 • **BRIET BLANES, Timoteo**
 **E-46100 Burjasot (Valencia) (ES)**

(74) Representative:
 **Urizar Anasagasti, José Antonio et al**
 **Puerto Rico 6A, Bajo**
 **28016 Madrid (ES)**

(54) **METHOD FOR DETECTING MASS TRANSFER AND/OR CHECKING SEALING IN STORAGE AND/OR FLUID TRANSPORT FACILITIES**

(57) The invention relates to a method for detecting mass transfer through orifices, cracks or defects and/or checking sealing in storage and/or liquid fluid transport facilities such as depots (1) and transportation facilities (7) containing fluids (2). A series of probes, sensors or absolute pressure sensors (3), temperature sensors (4) and vibration sensors are built into the inside of the deposit (1) or transport facility (7), said sensors being connected to a processor (5) to which corresponding signals are sent. Said processor generates graphics and issues a diagnostic report regardless of the type, amount and state of the fluid (2) and the absolute pressure and temperature in the facility.

FIGURE 1

EP 1 074 829 A1

## Description

The present method for detecting mass transfer through orifices, cracks or defects and/or checking sealing in storage end/or liquid fluid transport facilities consists of detecting leaks even inferior to 100 ml/h of fluid in liquid state, when the facilities are in normal performance conditions, independently of the existence of transference through the mentioned spaces, of fluid in liquid or in gas state between the inside and the outside of the mentioned facilities, of the height of the phreatic level existing in the mentioned facilities or that they are open space, depressed or semi-depressed. all that by means of a mathematical analysis that utilizes expressions in relation to the variables of temperature, absolute pressure and vibrations, thereby automatically providing the test result

Until now, there exist several models and systems for verification of leak-sealing or leak detection in liquid fluid storage or transport facilities by means of the analysis of the inside pressure variation by pressure-testing the depot.

For practical instance of the present description, the liquid fluid storage or transport facilities can be found in the moment of executing this procedure y one or several of the following conditions:

1. Pressurized or vacuumed conditions
2. Atmospheric pressure conditions
3. With presence of fluid in liquid phase in the whole volume of the facility
4. With presence of fluid in liquid phase with more volume than the 75% of the facility
5. With presence of fluid in liquid phase with less volume than the 75% of the facility
6. With presence of fluids in gaseous phase.

And particularly, the atmospheric facilities for petrochemicals products, besides being in the conditions above described in the points 2. 3, 4, 5 may when they are with the presence of fluids only in gaseous phase, be in one of the three following conditions:

A) That hydrocarbons or mixtures that constitute an explosive or condensable mixture take part in the composition of fluids in gaseous phase

B) That there are no hydrocarbons in an appreciable quantity taking part in the composition of the fluids, because said fluids have been previously degessed.

C) That they have been subjected to important thermic variations due to the said fluid operations on facilities, such as degassing, cleaning or internal coating, which transmit large amounts of heat both to the material and to their environment too. causing a thermic unbalance that generates a variation of the internal pressure values in such way, that if a test is performed afterwards, it will be insufficient if it is performed only taking into consideration the variations of pressure.

Until now, most of the existing systems, besides the traditional ones (by pressure or hydrostatic), are ruled by the standard of the U.S. Environmental Protection Agency (EPA/530/90)

As per said standard, all procedures are utilized in facilities that must contain fluid in liquid phase during the carrying out of the leak-proof test This standard claims capacity of detecting a leak inferior to 378 ml/h of the product in normal performance conditions of the facility.

For the usual volumes of the facilities, the existing procedures are only proved to fulfil their functions if the facility is in the conditions described in 2, 3 and 4, and even in most of them, only in the conditions 2 and 3, or they only test that part of the facility That is filled with fluid in the liquid phase, therefore existing a limitation for this kind of tests, that cannot be performed anytime, but only when all these conditionings are fulfilled, not always being they the most appropriate.

There exist automatic procedures that besides requiring the existence of fluids in liquid phase in the facility, must be permanently installed, what entails an added fix cost to the facility, discomforts, a mayor maintenance by the owner, demand of human resources to control and handle the apparatuses. etc., the said procedures only being capable of detecting leaks of 378 ml/h if long testing periods are applied (six hours or more).

There are also other methods. vs. ultrasound tests, which require the facility being in the conditions 2, 3 or 4, or that only test that part of the installation which is filled with fluid in the liquid phase, requiring as many tests as sections with liquid fluid in them can be isolated, so raising the price of the test and increasing the total execution time, besides the fact that that they cannot always be performed in all cases.

Some authors have ideated non-volumetric methods based on pressure or vacuum. those having the following limitations:

Some (LTC-2000 and VU 5000) only test that part of the facility that is filled with fluid in liquid phase, thereby running into the above-described inconveniences. In others (RTD V.12. PETRO COMP AND PETRO TITE) the facility must be totally filled up with fluid in liquid phase. this forcing the loading of the facility, independently of other conditionings like security. dangers of up- and downloading, operations in inappropriate moments from the commercial point of view, etc.

The document PCT/GB94/02196 regards and claims a procedure for checking the leak index in tanks containing volatile liquids, that is only applicable when the facility is in the conditions 2, 3 and 4, because if it is pretended to be applied in the condition 5, the testing periods are enlarged in a very considerable and indeterminate manner.

In the procedure described in the cited document, the pressure value is used, and it is needed to wait until the temperature of both the fluid in liquid phase end of the fluid that is present in the facility during the test in the gaseous phase has sufficiently stabilized for obtaining the test results, being this condition of constant temperature common to all leakage- or sealing detecting systems that utilize pressure or vacuum for their performance. Therefore it is preferably designed for depressed tanks, in which the variations of temperature due to the environment do not have a significant effect, therefore needing very long testing times because they are applied to non-depressed facilities.

Furthermore, the method disclosed in the PCT/GB94/02196 cannot be applied if there exist significant variations of atmospheric pressure (barometric storms), because the utilized instrumentation measures variations of relative pressure and finds itself affected by variations of the atmospheric pressure. At the same time, the application field of this method refers to facilities in which fluid in liquid phase is present during the test time, or also that the volume of fluid in gaseous phase is inferior to 4.000 liters, that is to say, it is not applicable to facilities that are free from fluid in liquid phase. In case that the volume of fluid in gaseous phase is larger, the testing times are excessively enlarged.

The PCT/GB94/02196, describes and claims the utilization of deoxygenated nitrogen or another inert gas as the gas responsible of increasing the pressure in the system by means of the reactions with combustible fluids, with the inconvenience of the need of appropriate facilities for storage and transportation of these gases, with its corresponding cost and maintenance.

Also, the PCT/GB94/02196 suggests higher times of previous preparation and strict conditions for the performance of the test as i.e. |fill-up| of the facility with fluids in liquid phase and waiting the times needed until the stabilization of temperature is reached, etc., by performing the test as a comparison of the pressure variation caused by an artificial leakage with the pressure variation during the determinate time in the last phase of test so being able to conclude with a result in a more or less subjective way.

The method described in the PCT/GB94/02196 gives priority to the pressure test therefore not considering the minimization factor of environmental contamination during the carrying out of the test fore, if there exists a leakage, it will increase due to existing inside overpressure. Likewise, the fault could be bunged and so remain masked.

In depressed facilities, the height of the phreatic level or the height of the fluid column existing in the facility, conditions the pressure value or vacuum to be applied in the facility in order to make the test be effective. Therefore, the measuring range of the instruments to be used in the procedure is a decisive factor that allows performing the test in any circumstances.

In open space facilities, the pressure increasing spontaneously produced in the inside of the facility due to the greenhouse effect also requires from the instruments a sufficiently wide range, due to that in the PCT/GB94/02196 is claimed a pressure range between 250 mbar over the atmospheric pressure, and 250 mbar under the atmospheric pressure, which is enough range to fulfill all conditions mentioned above.

Therefore, some of the existing systems take into account some of the pressure and the temperature values in order to observe when the temperature stabilizes or varies in such a small interval, that its influence on pressure during the test does not show significant incidences, in order to proceed to initiate the analysis of the pressure variation. As a conclusion, all existing systems are conditioned by each of the following variables: internal pressure and temperature, internal volume of fluid in liquid and gaseous phase, atmospheric pressure and vibrations in the exterior of the facility, in such manner that these procedures cannot be used unless these variables show specific values and furthermore vary very little. Definitely, they have a limited application.

By means of the utilization of the procedure for detecting mass transfer through orifices, cracks or detects and/or the verification of sealing in liquid fluid storage and/or transport facilities, subject of the present invention, it is pretended to avoid and to palliate all these inconveniences. For this purpose, all data of the facility are entered in a computer program (diameter, length, material type, thickness of the wall and total volume), and of its contents (column height of liquid fluid), a calculation of pressures and test times is performed. the data from the instruments of the system are registered, and finally all information is processed or analyzed and a report is issued including the diagnostics of the test result.

What is done is an evaluation and adjustment of the pressure values in relation to the pressure and temperature values taken, that is to say, it transforms the variations of temperature of the fluids into pressure variations, corrects the pressure deviations produced by the temperature variations, in a way that by means of its automatic and/or computerized analysis through several mathematical, physical chemical terms and an analysis of vibrations it uses the specified corrections to integrate or join them to the resulting pressure variations or |diagnostics function| of the fluids and to determine the result of the performed test whose stability or resulting variation in the pressure indicates the existence of sealing or leakage in the facilities.

So, the procedure fulfills its aim end achieves a much more wider scope than that of the presently existing methods, because besides of being applicable in the conditions described as in 1, 2, 3, 4, and condition 6 in all its variants, it is also applicable in any one of the following conditions:

*    inside fluids may be present in any form, that is, in liquid, gaseous phase or being partly liquid and partly gaseous (with total independence of the volume ratio existing in both phases)

* physical characteristics of the facility, diameter, length thickness and material.
* the type of facility, that is to say, being it open space, depressed or semi-depressed.
* or variations produced in the atmospheric pressure (|barometric storm|), because absolute pressure is measured, and consequently, the atmospheric pressure and its variations do not condition the results of the procedure.
* or variations produced in the temperature
* or variations produced in the spectrum of background vibrations.

For that this procedure is capable of being applied independently of the conditions of the facility, correcting the effects of temperature and atmospheric pressure changes in the facility, as well as correcting the variations of absolute pressure in relation to the variations of temperature.

It takes into account not only the filling level, but also the volume of fluid in liquid phase in its inside, the material the tank is made of and its thickness, its diameter and length. The data of the facility are introduced, those being saved for further consults or tests, making it possible to keep a log of the facility.

It performs the diagnostics in an automatic way, without any kind of subjectivity of the person responsible of the test.

It calculates the total waiting times in relation to the state of the facility end its conditions, according to the size of the leakage to be detected, issuing the report (together with the diagnostics of the test) in an automatic way, being at the same time able to send test data in real time, report and final diagnostics, via modem to any specific point.

It is capable to be applied both to totally empty facilities (or exempt of liquid fluids), as to non-empty ones.

It is advisable to perform a calibration of all measuring instruments the system uses. as also a test of the perfect functioning of the system, before carrying out the test itself. minimizing the probability of wrong alarm in the case of detecting leakage or defects.

It is ecological in the meaning that it always gives priority to the test of negative pressure, except on facilities totally exempt of liquid fluids, there being performed the pressure test. This way it is avoided to a great extent the risk of a big contamination by the leakage itself and by failure of the facility, so respecting the surrounding environment and preserving it.

On the other hand, the facility must not be filled up with fluid, or there must be let a determinate volume of air chamber, or there must be waited until the atmospheric pressure (i.e. by a storm) is stabilized, fore its instrumentation directly measures the absolute pressure with a resolution less or equal to 0.001 bar; as soon us the facility can be accessed, the test can be performed.

It is also applicable to post-reparation facilities, fore taking to account the temperature variations, it corrects the variations of absolute pressures in relation to variations of temperature. In post-reparation facilities and in the case of post-cure the temperature varies significantly.

To facilitate a better understanding of this description and forming integral part of it, a series of illustrations are given, showing in an illustrative but not limiting way the following:

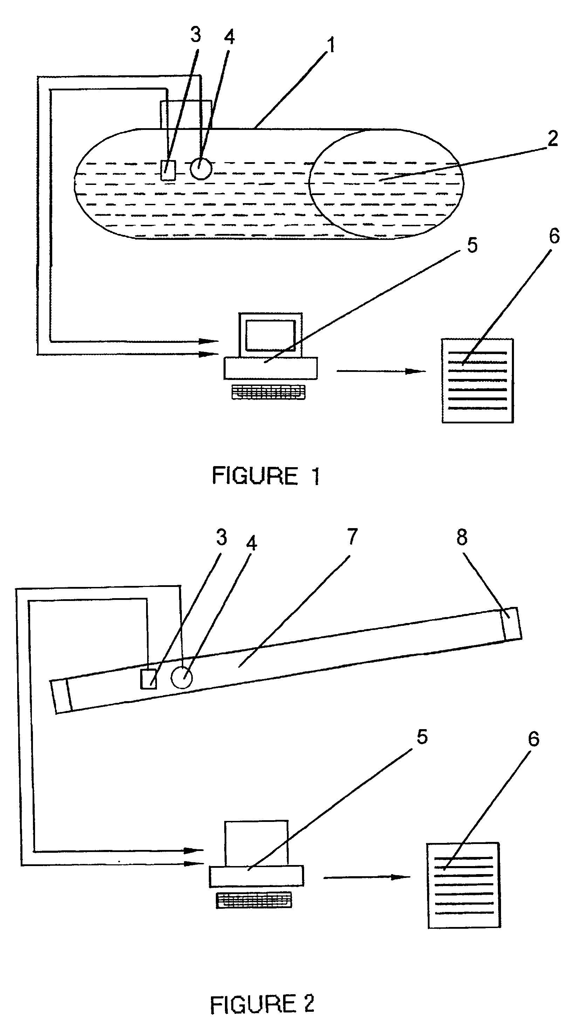

Figure 1.- Mounting scheme of the basic procedure for leakage detecting, subject of the present invention, applied to a tank.

Figure 2.- Mounting scheme of the basic procedure for leakage detecting, subject of the present invention, applied to a fluid transport facility.

Figure 3.- Graph temperature - time carried out with the values obtained in a practical test in a facility with 50 $m^3$ of space free of liquid under a pressure of 150 mbur, measuring the temperature during a period of 90 min.

Figure 4.- Graph absolute pressure - time, carried out with the values obtained in a practical test, in a facility with 50 $m^3$ of space free of liquid under a pressure of 150 mbar, measuring the absolute pressure during a period of 90 min.

Figure 5.- Graph relative pressure - time, carried out by means of the combination of the graphs in figs. 3 and 4, and the analysis with the mathematical terms used by the system.

Figure 6.- Graph temperature - time, carried out with the values obtained in a practical test in a facility with 50 $m^3$ of space free of liquid under a pressure of 120 mbar, measuring the temperature during a period of 60 mm.

Figure 7.- Graph absolute pressure - time carried out with the values obtained in a practical test in a facility with 50 $m^3$ of space free of liquid under a pressure of 120 mbar. measuring the absolute pressure during a period of 60 min.

Figure 8.- Graph relative pressure - time, carried out by means of the combination of the graphs in figs. 6 and 7, and the analysis with the mathematical terms used by the system.

Figure 9.- Graph temperature - time, carried out with the values obtained in a practical test in a facility with 50 $m^3$ of total volume, with an empty tank, performing a vacuum of 120 mbar, measuring the temperature during a period of 75 min.

Figure 10.- Graph absolute pressure - time carried out with the values obtained in a practical test, in a facility with 50 $m^3$ of space free of liquid under a pressure of 120 mbar, measuring the absolute pressure during a period of 75 min.

Figure 11.- Graphs relative pressure - time and absolute pressure - time, carried out by means of the combination of the graphs in figs. 9 and 10, and the analysis with the mathematical terms used by the system.

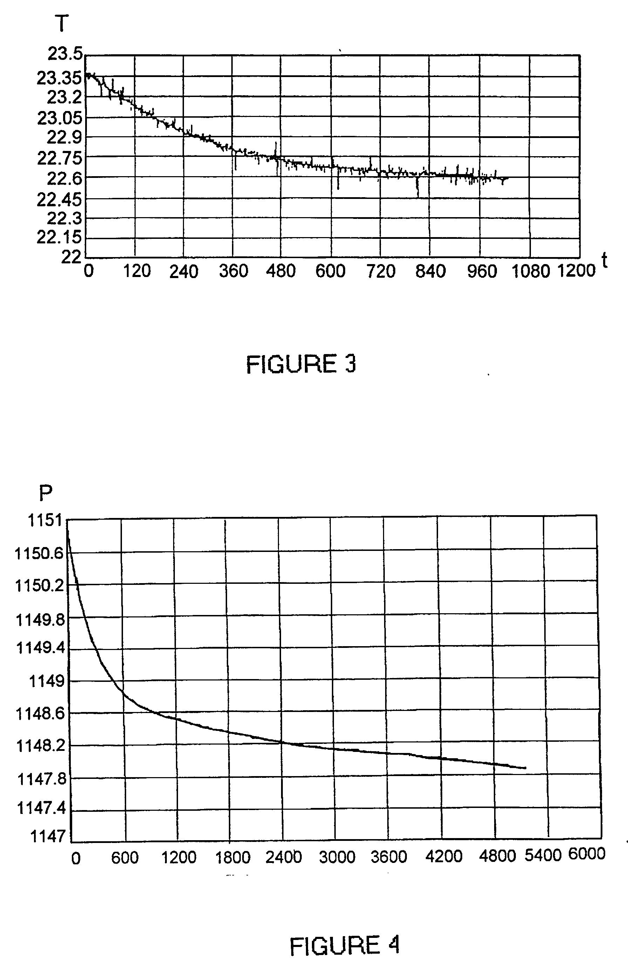

As the figures show, in the procedure of the present description there are several parts to be distinguished; a tank or depot (1) containing fluid (2) in its inside, with the corresponding in- and outputs, on which there are applied a series of testing spikes, sensors or absolute pressure gauges (4) also inside, being both sensors (3 and 4) connected to a microprocessor (5) to which the corresponding signals are sent, the said microprocessor emitting graphics (fig. 3 to 11) as well as a diagnostics report.

Thus, it is a matter of a detecting system of leakage in fluid storage (1) and transport (7) facilities with their respective sealing devices (8) that seal the section of the facility to be checked when it is a matter of facilities for fluid transportation.

Due to the different or multiple conditions of the facilities' environment (1,7), like the phreatic level in depressed tanks, or high temperatures in open space tanks etc., that cause a variation of their inner pressure, the procedure of the invention utilizes sufficiently wide-ranged instrumentation, for this procedure being independent of these conditionings, that is to say, pressure tests can be performed by applying the facility to absolute pressures between 10 mbar (milibar) and 9 bar of pressure, as well as to vacuums ranged between 1 mbar and 800 mbar.

As a difference with presently existing procedures, this procedure, by widening its application subject to open space facilities and depressed facilities, whatever are the heights of liquid existing in them. etc., utilizes an instrumentation with very wide ranges, that makes a difference to the procedures existing until now.

Furthermore, given the characteristics of this procedure and the wide range of its applications, it can be used in storage depots (1) for liquid petrochemical products of a Service Station, that is to say, in gas stations, as well as in depots not belonging to these Service Stations.

The procedure of the invention has the following steps:

Step 0 #    Previous verification of the test system
Step 1 #    Data introduction:

        #    Volume of the facility
        #    Volume of existing fluid
        #    Height of the fluid column
        #    Type of fluid
        #    Features of the facility

            #    Wall thickness
            #    Type of material

        #    Diameter
        #    Length

Step 2 #    Calculation of the test pressures

        #    Calculation of test times

Step 3 #    Obtaining of absolute pressures

        #    Obtaining of temperatures
        #    Obtaining of vibration signals

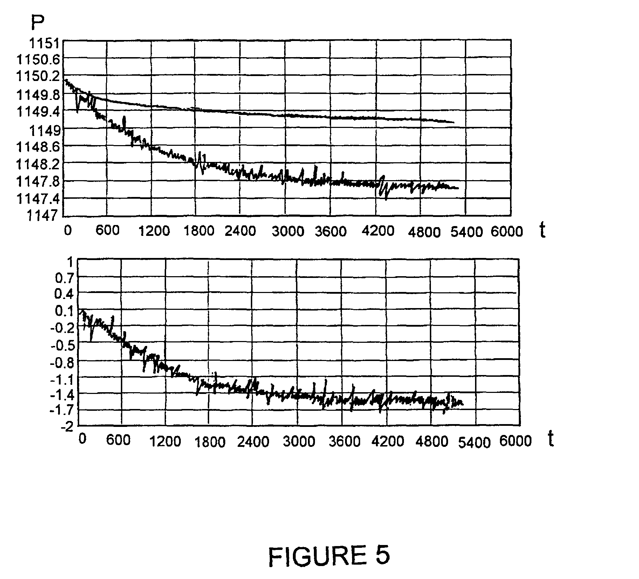

Step 4 #    Generation of diagnostics function (figs. 5, 8, 11) based on the received data
Step 5 #    Spectral analysis

            #    Analysis of said diagnostics function

Step 6 #    Final diagnostics of the test
Step 7 #    Issuing and printing out of the test report

Step 0 consists of checking out that the instrument do function, for that purpose, a leakage in the depot (1) or transport facility (7) is provoked by means of any controlled manner, like opening of one of the filler necks, etc. in such way that when the system is tested, all used apparatuses and graphs do function giving the leakage diagnostics as result

The data of the facility are usually entered (Step 1) from a keyboard to the microprocessor (5), based on these, the system calculates the test pressures and test times (Step 2), for that purpose being it necessasy to introduce certain physical features of the facility itself, as well as parameters relative to its initial conditions.

Calculations are done by means of a set of mathematical, physical, chemical and vibration terms, whose relations are:

$$PB = PB(\rho, T, K, R, t, V, P),$$

$$V = V(L, e, D),$$

$$t = t(PB, TE)$$

$$TE = TE(PB, t)$$

where |P| is the absolute pressure; |p| is the density; |T| is the temperature; |D| is the diameter of the facility; |e| is the thickness of the plate of the facility: |L| is the length of the facility; |V| is the volume of the facility; |K| is a factor that depends on the material the facility is made of; |R| is a factor that depends on the type of fluid; |t| is the duration time of the test |PB| is the absolute pressure of the test |TE| is the time of stabilization.

The needed test performance times as well as the pressure to be applied to the system (step 2), be it under pressure or be it under vacuum, that is to say, that the result of relative pressure be positive or be negative, arise from these relations.

The fact of introducing these data not only involves the calculation of the parameter described above, but the system already starts issuing the final test report (step 6)

Before the test start-up, the perfect functioning of all parts of the system as well as of the whole global system is verified.

After this initial verification the system is ready to start the test.

If there exists fluid in liquid phase in the facility, there is performed first the vacuum test (for ecological reasons, because potentially, in the case of fracture or without it we would be contaminating the environment in a dangerous way), utilizing volumetric and non-volumetric diagnostics methods; this way if the non-volumetric method (which is much faster) detects any defect, the test is finished. Otherwise, the volumetric diagnostics method is applied, the test ending as well, if it also detects any defect, being it convenient to repeat several times the non-volumetric method for the sake of safety.

If both methods are not able to detect any defects, the application of the volumetric pressure test is performed, finishing the test if it is truly able to detect a defect. If, after performing vacuum test and pressure test, none of the methods has diagnosed any defects. the test is also finished, with the result of the facility being in good conditions.

In the volumetric test the absolute pressures and the inside temperatures of the facilities are taken (step 3) then going forward to the analysis of a function (step 5) that results from both parameters (pressure and temperature); here is another of the basic differences to most of the actually already existing methods and systems: the variations of atmospheric pressure do have any effect on our final results (therefore, they can be performed at the moment of barometric storms, low pressures, summer storms, etc.), nor the variations of temperature inside the facility have any effect on the final test diagnostics (we can apply this system, even after having repaired the inside of a faulty facility with resin and fiber, which means that in those moments there exists an exothermical reaction with significant variations of temperature; neither have influence on the diagnostics the temperature variations that take place outside the facility; it can be applied as well to open space storage and transport facilities of fluids)

Once the test is finished, the test report is issued and printed (step 7), together with diagnostics (step 4) and the graphs of pressure and temperature. (Fig. 3 to 11).

It is also possible, via modem, to send the test report to the desired electronic addresses.

With the procedure of the present description there can be selected the most appropriated techniques for every kind of test fluid class, filling level, scenario, performance costs in situ, etc. because the diagnostics dictates the most adequate procedure, according to the technical specifications of the system, hereby taking maximal advantage of the possibilities and service-features of each one of the different methods and techniques involved: volumetric methods, level measuring, PVT analysis (pressure, volume, temperature), other non-volumetric methods; spectral analysis of vibrations, etc. as well as eliminating or reducing the external and internal interferences. It is in fact a matter of an optimal combination and not of a mere union or juxtaposition of methods.

The whole procedure consists of: calibration, verification, measuring, data acquisition, processing, repeating and diagnostics. It is performed in an automatic and objective way, being continuously controlled by the system (5) itself, and supervised by the personnel in charge, the diagnostics being finally filed and printed automatically, so allowing the possibility of consulting the scientific proof of it, taking a log a each facility.

This procedure also can be used to verify measuring probes of the fluid level, measuring instruments for the flow taken out from the facility, and in general, other volumetric methods for detection of leakage.

Therefore, this procedure combines complementary methods by one sole managing program, eliminating the inconveniences arisen from the limitations of each one of them separately: for instance, it combines the described volumetric method with a non-volumetric one based upon spectral analysis of the vibrations produced by the present leakages through the existing defects in the diagnosed facility, through subjecting the facility to a variation of absolute pressure, by means of the comparison of background spectra from vibrations in the facility without providing this pressure, with the spectra taken after subjecting the facility to the indicated pressure.

The measuring, registering and treatment of the vibration signals is automatically performed by means of the devices and computer programs specifically designed for diagnostics based upon spectral analysis by using the signals of each sensor to the combined one of all existing ultrasonic sensors in the facility.

The whole procedure is performed in a constant automatic and simultaneous manner. that is, all measures are taken once at the same time in a continuous way (step 3).

In the figures 3 to 11, there are represented two practical examples of this procedure applied to depots (1), for instance, the figs. 3 to 8 refer to a facility of 50 $m^3$ of room free of fluid, performing a pressure of 150 mbar, measuring the temperature and pressure during a period of 90 mm., wherein the fig. 3 represents the data directly obtained by the signals that were sent by the sensor or thermometer (3) along the time, to the processor (5) in which previously there have been entered the physical features of the system.

At the same time, the sent signals of absolute pressure of the system (fig. 4) are taken along the time. By means of a combination of both graphics (3 and 4), and analyzing the mentioned mathematical terms a graph 5 achieved, of variation of pressure in time, whose pressure value has been modified in relation to the temperature and the mentioned functions. On this case, as a constant horizontal line is not obtained along the time, this means a variation in real pressure, and therefore it indicates a leakage in the tested depot, this test previously having been tested on vacuum conditions.

All the shown lines in the graphs can be smoothed or otherwise treated with any known method.

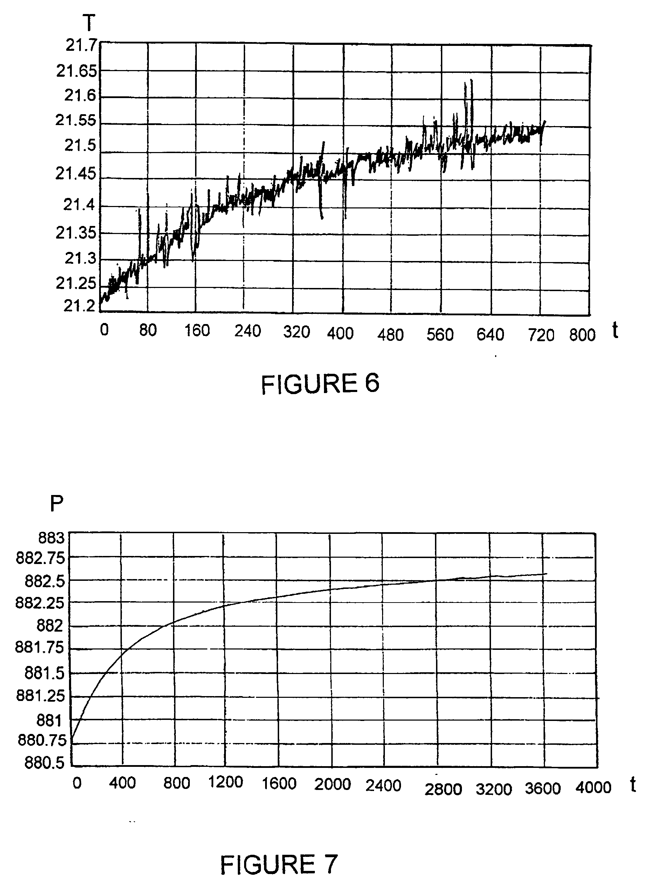

The second proposal is a facility with 50 $m^3$ of space free, of fluid, performing a vacuum of 120 mbar, measuring the temperature and the pressure during a period of 60 mm., whose values measured with the pressure (3) and temperature (4) probes are represented in the figs. 6 and 7, ending with a last graph 6, which indicates the showing up of leakage in the depot (1).

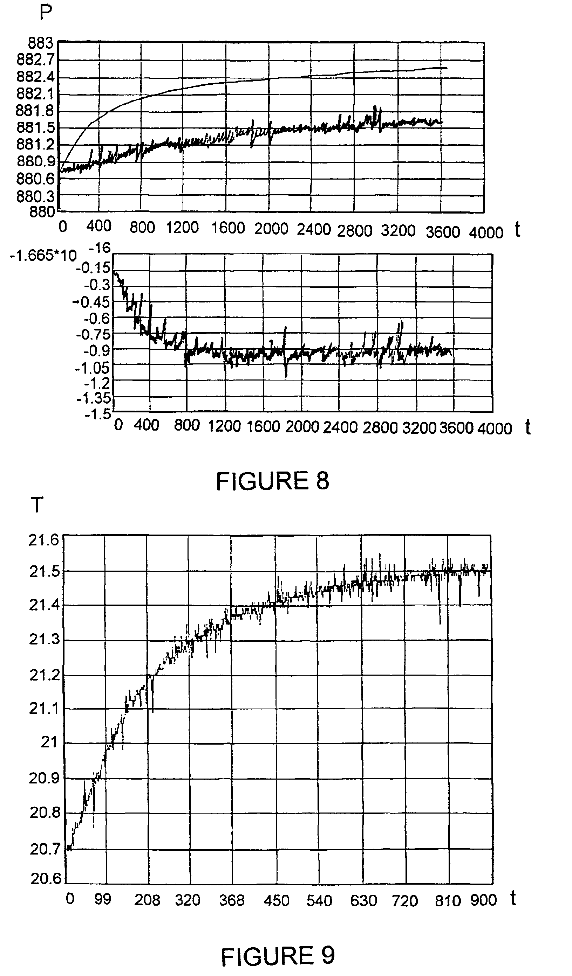

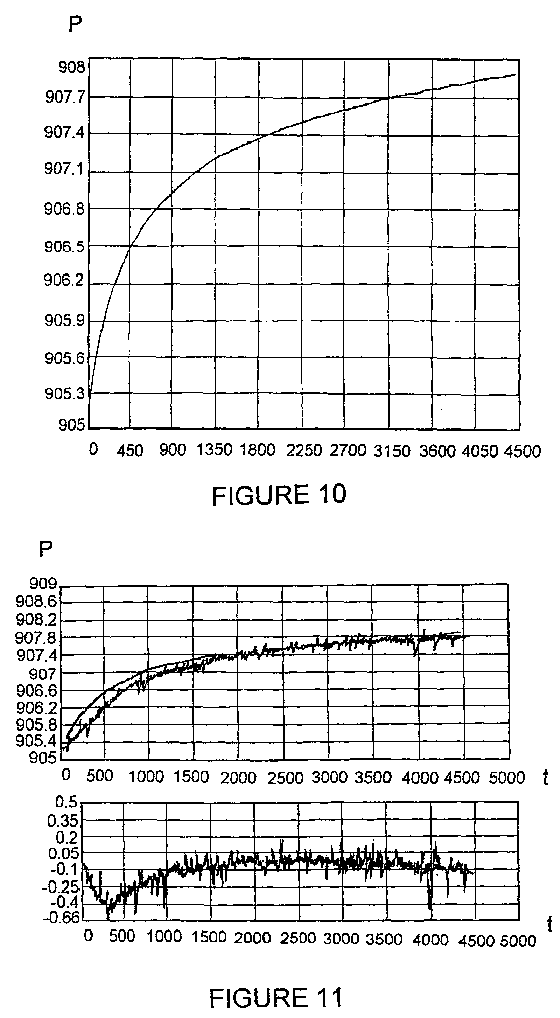

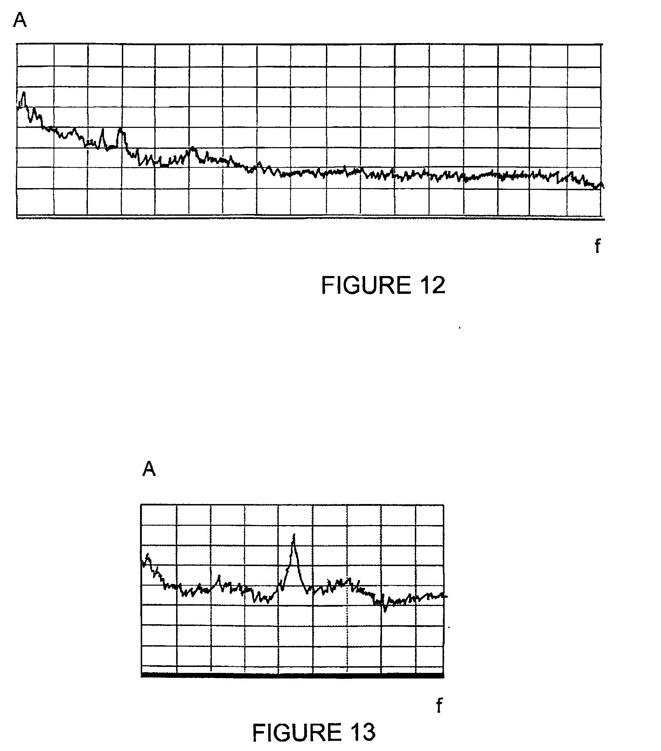

The same occurs in the third case, which consists of an empty depot of 50 $m^3$ of totally empty volume being subjected to a vacuum of 120 mbar during 75 min. obtaining the graphs shown in fig. 9 of temperature, in fig. 10 of absolute pressure and in fig. 11 of variations in the absolute pressure, finally indicating the existence of defects in the conditions and during the period of the test.

This procedure is also able to be used on facilities for the storage of liquid petrochemical products, being it able to detect a leakage lower than 100 ml/h of fluid in liquid phase existing when the facility is in normal conditions of performance, or a leakage of larger magnitude, and that independently of the existence, due to the effect that causes it, of fluid transference in liquid or gaseous phase between the inside and the outside of the facility. Also, when the installations are without product in the liquid phase (only containing gas and/or air, but no vapors of hydrocarbons) the procedure is carried out performing an air pressure on the facility by means of a compressor or any other known means.

If the liquid petrochemical product finds itself without product in the liquid phase (they only contain gas and/or air and hydrocarbon vapors), this procedure is executed by applying a pressure by means of the introduction if an inert gas, but if it does not contain hydrocarbon vapors, then there is performed a negative pressure or vacuum in the facility through any known means like vacuum pumps, etc.

Once sufficiently described the nature of the present invention, as well as a practical application of it there is only left to add that both the form as the materials and its embodiment are subjected to modifications, previously that they do not substantially affect the characteristics that are claimed as follows:

## Claims

1. Procedure for detection of mass transference and/or checking sealing in storage and/or liquid fluid transport facilities like depots (1), transport facilities (7), characterized in that starting from a facility consisting of a depot (1) or transport facility (7), which contains fluids (2) in its inside with its appropriate in- and outputs, in which there are applied a series of probes, sensors or absolute pressure meters (3), temperature meters (4), and vibration meters of the inside of the depot (1) or transport (7), these sensors (3 and 4) being connected to a processor (5), to which they send the appropriate signals (figs. 3 to 11), simultaneously emitting a diagnostics report (6), independently of the kind of fluid (2), the quantity of it in each state of the phase, as well as of the absolute pressure and temperature of the fluids in the facility; wherein the procedure consists of the following steps:

| | |
|---|---|
| Step 0 # | Previous verification of the test system |
| Step 1 # | Introduction of data: |
| Step 2 # | Calculation of the test pressures |
| # | Calculation of test times |
| Step 3 # | Obtaining of absolute pressures |
| # | Obtaining of temperatures |
| # | Obtaining of vibration signals |
| Step 4 # | Generation of \|diagnostics function\| (figs. 5, 8, 11) starting from the entered data and the signals coming from the pressure and temperature probes (3) |
| Step 5 # | Spectral analysis |
| # | Analysis of said diagnostics function |
| Step 6 # | Final diagnostics of the test |
| Step 7 # | Issuing and printing out of the test report, wherein the whole process consisting of: verification, measuring, data obtaining, processing, repetition, and diagnostics is performed in an automatic and objective way, being it controlled at any time by the system (5) itself, and being it supervised by the personnel in charge, the diagnostics being automatically filed and finally printed out, making it possible to consult the scientific proof of it. |

2. Procedure, according to claim 1, characterized in that the data entered in step 1 are relating to the physical features of the system, which are:

- #  Volume of the facility
- #  Volume of the existing fluid
- #  Height of the fluid column
- #  Type of fluid
- #  Characteristics of the facility: thickness of the wall, material type, diameter and length.

3. Procedure, according to previous claims one and two, characterized in that the analysis through which the calculation of the test pressures is obtained, be it pressure or vacuum, as well as the calculation of the minimal times of the test, is performed taking into account the data entered in step 1 and the mathematical, physical, terms and terms of vibration, based upon the functions:

$$PB = PB(\rho,\ T,\ K,\ R,\ t,\ V,\ P),$$

$$V = V(L,\ e,\ D),$$

$$t = t(PB,\ TE)$$

$$TE = TE(PB,\ t)$$

4. Procedure, according to previous claims, characterized in that the values of absolute pressure and temperature (step 3) of the system are introduced into the computer (5) in a continuous, simultaneous and automatic way, through the signals respectively sent by the pressure- (3) temperature (4) and vibration probes.

5. Procedure, according to previous claims, characterized in that the values of the absolute pressure measured with the probe (3) in the inside of the facility are corrected and compensated in relation to temperature, through the application of the mathematical terms expressed in claim 2, obtaining the graph of the diagnostics function. (figs. 4, 7 and 10).

6. Procedure, according to previous claims, characterized in that, for the performance of the vacuum and pressure tests, there are taken into account the initial conditions of the facility: that is exactly why, if the facility is empty without fluid (post-reparations. etc...) there is only carried out the pressure test furthermore, if the facility is in these conditions, there will only be performed the test with the volumetric system, because the non-volumetric system is in these conditions not sufficient.

7. Procedure, according to claim one, characterized in that once finished the test report is issued, printing it out after it (step 7) together with the diagnostics (step 4) and the graphs of absolute pressure, temperature, vibrations and diagnostics function (figs. 3 to 11), sending, if required, via modem the report test to the desired electronic addresses.

8. Procedure, according to claim one, characterized in that this procedure combines complementaty methods well controlled by one sole managing program, for instance, it combines the described volumetric method with a non-volumetric one based upon spectral analysis of the vibrations produced by the present leakages through the existing defects in the diagnosed facility, through subjecting the facility to an increment or decrement of pressure, by means of comparison of background spectra from vibrations in the facility when not providing this pressure, with the spectra taken after subjecting the facility to the indicated pressure.

9. Procedure, according to claim 1 and 8, characterized in that the results of the spectral analysis allows to rapidly detect leakage, and also subsequently defects of sealing, while simultaneously performing the other volumetric diagnostics.

10. Procedure, according to claim one, characterized in that the absolute pressure signals of the system (fig. 4) sent along the time are taken in combination with both graphs (3 and 4) and by analyzing the mentioned mathematical terms there is achieved a graph 5 of variation of absolute pressure with the time, whose pressure value has been modified in relation to the temperature and the said functions, in this case, because of not being established a constant horizontal line along the time, this implicates a variation of the diagnostics function, therefore indicating a leakage in the facility.

11. Procedure, according to claim one, characterized in that the procedure verifies the fluid level measuring probes, measuring instruments of the flew taken from the facility, by way of comparison between the entered value and the measured value.

12. Procedure, according to claim one, characterized in that the system utilizes the same fluid of the facility, or a similar one, for the performance of the test.

13. Procedure, according to claim one, characterized in that the existing fluids in the facility are in gaseous phase.

14. Procedure, according to claim one, characterized in that the fluids contained in the facility are in liquid, as well as in gaseous phase.

15. Procedure, according to claim one, characterized in that the fluid contained in the facility is only in liquid phase.

16. Procedure, according to claim one, characterized in that the pressure to which the facility is subjected in the pressure tests is within the range of 10 mbar and 9 bars.

17. Procedure, according to claim one, characterized in that the vacuum to which the facility is subjected in the vacuum tests is within a range of 1 mbar and 800 mbar under the atmospheric pressure.

18. Procedure, according to claim one, characterized in that in facilities for storage of liquid petrochemical products only containing gas and/or air but no vapors, it is carried out by performing a test with pressurized air in the mentioned facilities, through any known technique.

19. Procedure, according to claim one, characterized in that in facilities for storage of liquid petrochemical products only containing gas and/or air but no vapors, it is carried out by performing an air-vacuum test in the mentioned facilities, through any known technique.

20. Procedure, according to claim one, characterized in that in facilities for storage of liquid petrochemical products only containing gas and/or and hydrocarbon vapors, it is carried out by performing a pressure test in the mentioned facilities, by means of the introduction of an inert gas.

21. Procedure, according to claim one, characterized in that in facilities for storage of liquid petrochemical products only containing gas and/or air and hydrocarbon vapors. it is carried out by performing a vacuum test in the mentioned facilities by means of the introduction of an inert gas.

22. Procedure, according to claim one, characterized in that in facilities for storage of liquid petrochemical products that are without product (or in a not significant quantity) in liquid phase, that only contain gas and/or air and hydrocarbon vapors, it is carried out by performing a vacuum test in the facilities.

23. Procedure, according to claim one, characterized in that in facilities for storage of liquid petrochemical products that are without product (or in a not significant quantity) in liquid phase, that only contain gas and/or air and hydrocarbon vapors, it is carried out by performing a pressure test in the facilities.

24. Procedure, according to claim one, characterized in that in facilities for storage of liquid petrochemical products that are containing product in liquid phase and with vapors and/or gases, it is carried out by performing a pressure test in the mentioned facilities by means of the introduction of an inert gas.

25. Procedure, according to claim one, characterized in that in facilities for storage of liquid petrochemical products that are only containing gas and/or air, it is carried out by performing a negative pressure or vacuum test of the mentioned facilities by means of vacuum pumps or any other known technique.

26. Procedure, according to claim one, characterized in that it is applied to storage depots for liquid petrochemical products belonging to a service station (gas station).

27. Procedure, according to claim one, characterized in that it is applied to storage depots for liquid petrochemical products not belonging to a service station (gas station).

FIGURE 1

FIGURE 2

FIGURE 3

FIGURE 4

FIGURE 5

FIGURE 6

FIGURE 7

FIGURE 8

FIGURE 9

P

FIGURE 10

P

FIGURE 11

A

f

## FIGURE 12

A

f

## FIGURE 13

## INTERNATIONAL SEARCH REPORT

| | International application No.<br>PCT/ES 00/000 12 |
|---|---|

**A. CLASSIFICATION OF SUBJECT MATTER [6]:**

IPC6: G01M 3/32,

According to International Patent Classification (IPC) or to both national classification and IPC

**B. FIELDS SEARCHED**

Minimum documentation searched (classification system followed by classification symbols)

IPC6: G01M 3/26M 3/28, 3/32

Documentation searched other than minimum documentation to the extent that such documents are included in the fields searched

Electronic data base consulted during the international search (name of data base and, where practicable, search terms used)

EPODOC, WPI, PAJ, CIBEPAT

**C. DOCUMENTS CONSIDERED TO BE RELEVANT**

| Category* | Citation of document, with indication, where appropriate, of the relevant passages | Relevant to claim No. |
|---|---|---|
| A | WO 88/04031 A (NDE TECHNOLOGY INC.) 02 june 1988 (02.06.88)<br>Page 12, line 7 - page 19, line 15; figures 1,13 | 1-5, 7,10 |
| A | US 5201212 A (WILLIAMS BARRY N.) 13 April 1993 (13.04.93)<br>Column 7, line 11 - column 9, line 36; figures 1,9 | 1,2-5,20,21,24 |
| A | WO 95/10033 A (DENBY, CARL) 13 April 1995 (13.04.95)<br>Page 4, line 6 - page 8, line 6 | 1 |
| A | US 4308746 A (COVINGTON) 05 January 1982 (05.01.82)<br>Column 1, line 32 - column 3, line 22, figure 1 | 1,2 |
| A | US 5375455 A (MARESCA et al.) 27 December 1994 (27.12.97)<br>Column 5, line 48 - column 6, line 6, column 6, line 66 - column 8, line 6 | 1 |
| A | US 5295391 A (MASTANDREA et al.) 22 March 1994 (22.03.94)<br>Column 2, line 6 - column 3, line 36; figure 1 | 1,2 |

[X] Further documents are listed in the continuation of Box C.　　　　[X] See patent family annex.

| | |
|---|---|
| * Special categories of cited documents:<br><br>"A" document defining the general state of the art which is not considered to be of particular relevance<br><br>"E" earlier document but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br>31 March 2000 (31.03.00) | Date of mailing of the international search report<br>12 April 2000 (12.04.00) |
| Name and mailing address of the ISA/<br><br>Facsimile No.　　SPTO | Authorized officer<br><br>Telephone No. |

Form PCT/ISA/210 (second sheet) (July 1992)

## INTERNATIONAL SEARCH REPORT
Information on patent family members

International Application No

PCT/ES 00/00012

| Patent document cited in search report | Publication date | Patent familiy member(s) | Publication date |
|---|---|---|---|
| WO 88/04031 A | 02.06.1988 | AU 8336787 A<br>EP 0334876 A<br>JP 3503674 T<br>EP 0334876 A4 | 16.06.1988<br>04.10.1989<br>15.08.1991<br>08.01.1992 |
| US 5201212 A | 13.04.1993 | NONE | |
| WO 95/10033 A2 | 13.04.1995 | AU 7817294 A<br>WO 9510033 A3<br>GB 2297623 A<br>EP 0740782 A1<br>GB 2297623 B<br>GB 2304908 A<br>JP 9503303 T<br>GB 2304908 B<br>US 5668308 A<br>AU 686671 B | 01.05.1995<br>11.05.1995<br>07.08.1996<br>06.11.1996<br>26.03.1997<br>26.03.1997<br>31.03.1997<br>11.06.1997<br>16.09.1997<br>12.02.1998 |
| US 4308746 A | 05.01.1982 | NONE | |
| US 5375455 A | 27.12.1994 | WO 9503535 A1<br>AU 7315694 A | 02.02.1995<br>20.02.1995 |
| US 5295391 A | 22.03.1994 | NONE | |

Form PCT/ISA/210 (patent family annex) (July 1992)